# EUROPÄISCHE PATENTSCHRIFT

(11) **EP 0 362 623 B1**
(45) Veröffentlichungstag und Bekanntmachung des Hinweises auf die Patenterteilung: **24.08.1994**
(21) Anmeldenummer: 89117434.4
(22) Anmeldetag: 21.09.1989
(51) Int. Cl.: C08L 69/00, C08K 13/02, C08L 67/02

(54) **Flammgeschütze, gut kristallisierende Polyethylenterephthalatformmassen**
Flame-retardant well-crystallizing polyethylene terephthalate moulding compositions
Compositions à mouler de polytéréphtalate d'éthylène ignifuges, ayant une bonne cristallinité

(30) Priorität: 04.10.1988 DE 3833694
(43) Veröffentlichungstag der Anmeldung: 11.04.1990
(73) Patentinhaber: BAYER AG, 51368 Leverkusen (DE)
(72) Erfinder: Joswig, Thomas, Dr., D-4060 Viersen 1 (DE); Kirsch, Jürgen, Dr., D-5000 Köln 80 (DE); Freitag, Dieter, Dr., D-4150 Krefeld 1 (DE)

(56) Entgegenhaltungen:
- EP-A- 0 046 642
- US-A- 3 671 487

## Beschreibung

Gegenstand der Erfindung sind flammgeschützte, gut kristallisierende Polyethylenterephthalatformmassen, die Polyalkylphosphonate und Kristallisationshilfsmittel enthalten.

Aus der DE-OS 24 58 967 sind flammwidrige Polyestermassen bekannt, die ein Polyalkylenterephthalat, das in der Hauptkette Bindungseinheiten basierend auf bromierten organischen aromatischen Verbindungen besitzt, sowie hochmolekulare organische Phosphorverbindungen enthalten. Die in der DE-OS 24 58 967 beschriebenen Polyestermassen besitzen den Nachteil, daß sie copolymerisiert stets organisch gebundenes Brom enthalten (Gefahr der Dioxinbildung beim Brand) und, da es sich um Copolymerisate handelt, wesentlich schwieriger herzustellen sind.

Aus der DE-OS 22 53 207 sind flammhemmende thermoplastische Polyesterharzzusammensetzungen bekannt, die als Bestandteile ein entflammbares hochmolekulares lineares Polyesterharz und als flammhemmenden Zusatzstoff Arylphosphonate enthalten. Aus der DE-OS 21 11 202 sind ebenfalls flammabweisende thermoplastische Polyester mit einem Gehalt an phosphorhaltigen Zusätzen bekannt, wobei als phosphorhaltige Zusätze Polyarylphosphonate genannt werden. Die in den Offenlegungschriften beschriebenen flammhemmenden thermoplastischen Polyester besitzen, wie eigene Versuche zeigten, nicht ausreichende Flammschutzeigenschaften. Nachteilig ist ferner, daß sich die Polyarylphosphonate nur schlecht in die thermoplastischen Polyester einarbeiten lassen.

Aus der DE-OS 21 32 350 sind phosphorhaltige Polyestermischungen mit verbesserten flammwidrigen Eigenschaften bekannt, die als phosphorhaltige Zusätze sowohl Polyalkylphosphonate als auch Polyarylphosphonate enthalten können. In der genannten DE-OS 21 32 350 werden auch verstärkte Polyesterpreßharzmischungen beansprucht (Ansprüche 7 bis 10), die Polypropylenterephthalat oder Polybutylenterephthalat als Polyester enthalten sowie verstärkende Füllstoffe, wie Glasfasern, und Polyphosphonat oder Polyphosphonatphosphat. Wie eigene Versuche zeigten, besitzen die verstärkten Polybutylenterephthalatpreßharzmischungen mit Polyalkylphosphonat als flammhemmender Zusatz keine ausreichende flammhemmende Wirkung.

Aus der deutschen Patentanmeldung P 38 00 672.3 sind verstärkte, flammgeschützte Polyethylenterephthalatformmassen bekannt, die mittels Polyalkylphosphonaten flammgeschützt sind. Nachteil dieser mit Phosphonaten flammgeschützten Formmassen ist die verminderte Kristallisationsgeschwindigkeit. Dadurch fallen bei der Verspritzung der Formmassen die erhaltenen Formteile amorph an. Entsprechende Formmassen können deshalb nicht für Zwecke eingesetzt werden, die eine hohe Wärmeformbeständigkeit erfordern. Deshalb müssen solchen Formmassen Kristallisationshilfsmittel zugesetzt werden.

Es zeigte sich aber, daß die Wirkung der bekannten Kristallisationshilfsmittel nicht ausreichend ist. Aufgabe der vorliegenden Erfindung war es deshalb, gut kristallisierende, flammgeschützte PET-Formmassen mit guten technischen Eigenschaften bereitzustellen, die, wenn möglich, auch bei niedrigen Formtemperaturen (≦100°C) verarbeitbar sind.

Gegenstand der Erfindung sind somit flammgeschützte, gut kristallisierende Polyethylenterephthalatformmassen aus
A) 45 bis 80, bevorzugt 40 bis 70, Gew.-Teilen Polyethylenterephthalat mit einer Intrinsic-Viskosität von >0,30 dl/g,
B) 1 bis 25, bevorzugt 3 bis 20, besonders bevorzugt 5 bis 15 Gew.-Teilen Polyalkylphosphonaten der Formel 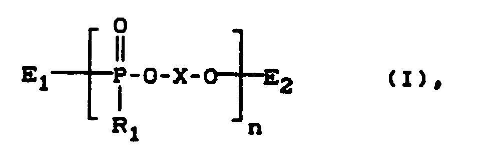 worin
   - R₁: für C₁- bis C₆-Alkyl steht,
   - X: für die Formel 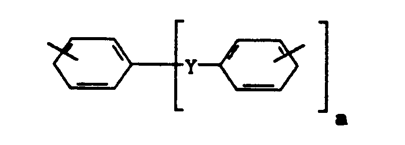 steht,
   in der
   - Y: eine Einfachbindung ist oder C₁- bis C₃-Alkylen, C₅- bis C₁₂-Cycloalkylen oder O, S, CO, SO₂ bedeutet und
   - a: für 0 oder 1 steht, oder
   - X: Naphthylen bedeutet,
   - E₁: für O-R₂, OH, O-X-OH steht, wobei R₂ für C₆- bis C₁₀-Aryl steht und X die obengenannte Bedeutung besitzt,
   - E₂: H, 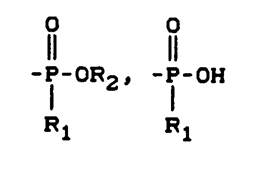 bedeutet, wobei
   R₁ und R₂ die obengenannte Bedeutung haben und
   - n: für ganze Zahlen von 2 bis 100 steht,
C) 0,01 bis 10, bevorzugt 0,1 bis 8 Gew.-Teilen ultrafeinem (<0,1 »m) Bariumsulfat,
D) 0,01 bis 5, bevorzugt 0,1 bis 4 Gew.-Teilen fluorierten Polyolefinen,
E) gegebenenfalls 0,1 bis 40 Gew.-Teilen anorganischen Verstärkungsmitteln und
F) gegebenenfalls 0,1 bis 10 Gew.-Teilen Verarbeitungshilfsmitteln.

Die erfindungsgemäß eingesetzten Polyethylenterephthalate stellen Polykondensationsprodukte dar aus aromatischen Dicarbonsäuren oder deren reaktionsfähigen Derivaten (wie den Dimethylestern) und aliphatischen Diolen oder deren reaktionsfähigen Derivaten, wobei mindestens 90 Mol-%, bezogen auf den Diol-Anteil, Ethylenglykol-Einheiten sind und 10 Mol-%, bezogen auf den Diolanteil, aliphatische oder cycloaliphatische, verzweigte oder unverzweigte C₃- bis C₁₈-Dioleinheiten oder Polyalkylenoxideinheiten sein können (vgl. z.B. DE 25 07 776, 24 07 074 und 24 07 776). Bevorzugte Polyethylenterephthalate enthalten mindestens 95 Mol-% Ethylenglykol-Einheiten, bezogen auf den Gesamtdiolanteil. Besonders bevorzugt ist reines Polyethylenterephthalat.

Die Polyethylenterephthalate lassen sich nach bekannten Methoden herstellen (siehe z.B. Kunststoff-Handbuch, Band VIII, Seite 695 ff, Carl-Hanser-Verlag, München 1973).

Die erfindungsgemäß eingesetzten Polyethylenterephthalate besitzen Intrinsic-Viskositäten von bevorzugt 0,4 bis 1,3 dl/g, besonders bevorzugt 0,5 bis 0,9 dl/g, gemessen in Phenol/o-Dichlorbenzol (1:1 Gew.-Teile) in einer Konzentration von 5 g/l bei 25°C.

Die erfindungsgemäß einzusetzenden Polyalkylphosphonate sind beispielsweise beschrieben in US 26 82 522, DE-OS 29 25 207 oder DE-OS 29 44 093.

Bevorzugt werden Polyalkylphosphonate der Formel (II) 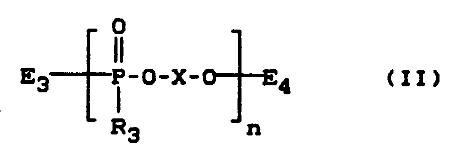
eingesetzt,
worin
- R₃: Methyl oder Ethyl bedeutet,
- X: für Phenylen, Bisphenylen, C₁- bis C₃-Alkylenbisphenylen, C₅- bis C₁₂-Cycloalkylenbisphenylen, Sulfonylbisphenylen, Oxobisphenylen, Thiobisphenylen, Carbonylbisphenylen oder Naphthylen steht,
- E₃: 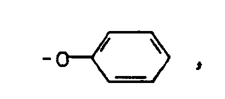 -OH, -O-X-OH bedeutet,
wobei
- X: die obengenannte Bedeutung hat,
- E₄: für H, 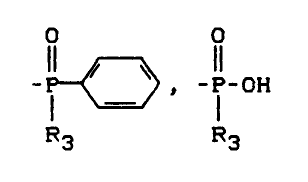 steht,
wobei
- R₃: die obengenannte Bedeutung besitzt, und
- n: für ganze Zahlen von 5 bis 80 steht.

Ganz besonders bevorzugt werden Polyalkylphosphonate eingesetzt, die der allgemeinen Formel (II) entsprechen und in der
- E₃: für 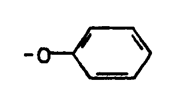 steht,
- E₄: 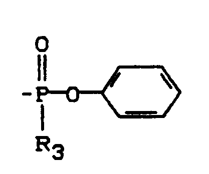 bedeutet,
- R₃: Methyl bedeutet und
- X: für 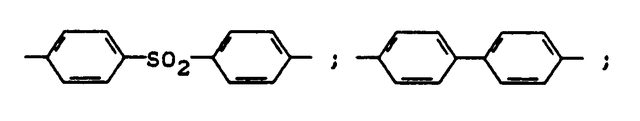 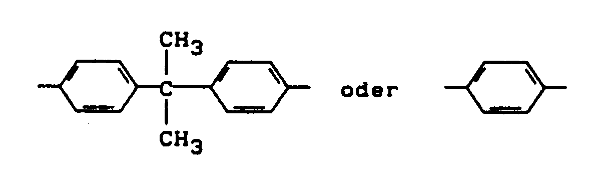 steht und
- n: 5 bis 50 bedeutet.

Beispielsweise werden als Polyalkylphosphonate genannt:
Bisphenol-F-polymethanphosphonat,
Bisphenol-A-polymethanphosphonat,
Dioxidiphenylpolymethanphosphonat,
Dioxodiphenylsulfonpolymethanphosphonat,
Catecholpolymethanphosphonat,
Resorcinpolymethanphosphonat und/oder
Hydrochinonpolymethanphosphonat,
bevorzugt
Bisphenol-F-polymethanphosphonat,
Dioxidiphenylpolymethanphosphonat und/oder
Hydrochinonpolymethanphosphonat.

Die erfindungsgemäß einzusetzenden Polyphosphonate können gegebenenfalls durch geringe Mengen mehrfunktioneller Verbindungen verzweigt sein. Die Verzweigermenge ist ≦5 Mol-%, bezogen auf eingesetzte Menge Bisphenol. Als Verzweiger sind trifunktionelle und tetrafunktionelle Hydroxyverbindungen, wie 4,6-Dimethyl-2,4,6-tri-(4-hydroxyphenyl)heptan; 1,3,5-Tri-(4-hydroxyphenyl)-benzol und 1,4-Bis-(4,4'-dihydroxytriphenylmethyl)benzol, trifunktionelle oder tetrafunktionelle Carbonsäurearylester, wie Trimesinsäuretriphenylester und Pyromellitsäuretetraphenylester, und Phosphorsäuretriarylester, wie Triphenylphosphat, geeignet. Als bevorzugter Verzweiger kann Tris-1,3,5-[(4-hydroxy-2-phenylen-2-propyliden)-benzol] eingesetzt werden.

Die erfindungsgemäß einzusetzenden Polyalkylphosphonate besitzen im allgemeinen eine relative Lösungsviskosität von 1,05 (entsprechend einer mittleren Molmasse von 2000 [n ca. 8 Monomereinheiten]) bis 1,40 (entsprechend einer mittleren Molmasse von 22000 [n ca. 90 Monomereinheiten]). Die Messung der Lösungsviskosität erfolgte in Methylenchlorid (0,5 g/100 ml Lösung) bei 25°C.

Das als Komponente C) eingesetzte ultrafeine Bariumsulfat, das hergestellt wird durch Zusammenbringen getrennter wäßriger Lösungen, die jeweils äquivalente Mengen Bariumionen und Sulfationen enthalten, und Abtrennen des Präzipitats, wobei man zur Herstellung von gefälltem Bariumsulfat mit einer Primärkorngröße von <0,1 »m in einem geschlossenen Reaktor die wäßrigen Lösungen der Reaktanten kontinuierlich in Teilvolumina hoher Anzahl zerlegt, diese zu diskreten Fällvolumina einer mittleren Volumengröße von <1 »l vereinigt und die gebildete Suspension des Präzipitats kontinuierlich aus dem Reaktor abführt, ist z.B. näher beschrieben in DE-A 38 10 423.

Die Primärkorngröße des ultrafeinen Bariumsulfats beträgt bevorzugt 0,09 bis 0,01 »m [Oberfläche (BET) : 80 bis 5 m²/g, bevorzugt 40 bis 10 m²/g].

Die als Komponente D) eingesetzten fluorierten Polyolefine sind beispielsweise beschrieben in "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, Nr. 10 A, Oktober 1970, Mc Graw-Hill, Inc., New York, Seite 134 und 774; "Modern Plastics Encyclopedia", 1975-1976, Oktober 1975, Band 52, Nr. 10 A, Mc Graw-Hill, Inc., New York, Seite 27, 28 und 472, und US-PS 3 671 487, 3 723 373 und 3 838 092.

Bevorzugt wird Polytetrafluorethylen (PTFE) eingesetzt.

Die erfindungsgemäß gegebenenfalls eingesetzten anorganischen Verstärkungsmittel (Komponente E)) umfassen alle bekannten für die Verstärkung von Polyalkylenterephthalaten bekannten Mittel. Zum Beispiel werden genannt: Glasfasern, Glaskugeln und/oder mineralische Füllstoffe, wie in Katz und Milewski, "Handbook of Fillers and Reinforcements for Plastics", Nostrand-Verlag, 1978 beschrieben. Bevorzugt werden als anorganische Verstärkungsmittel Glasfasern eingesetzt. Die eingesetzten Glasfasern besitzen im allgemeinen einen Durchmesser von etwa 6 bis 15 »m, bevorzugt 8 bis 13 »m, und ein Längen- zu Dicken-Verhältnis von größer als 45, bevorzugt 50 bis 200.

Als mineralische Füllstoffe seien beispielsweise genannt: Kaolin, Talkum, Glimmer, Quarzmehl, Gesteinsmehl, Erdalkalimetallcarbonate, Erdalkalimetalloxide, Titandioxid und/oder Zinksulfid. Die eingesetzten mineralischen Füllstoffe besitzen mittlere Teilchendurchmesser von weniger als 20 »m, bevorzugt weniger als 10 »m, insbesondere 2 bis 8 »m.

Die anorganischen Verstärkungsmittel werden bevorzugt in Mengen von 20 bis 35 Gew.-Teilen, besonders bevorzugt 25 bis 30 Gew.-Teilen eingesetzt.

Als Verarbeitungshilfsmittel (Komponente F)) können den erfindungsgemäßen Formmassen zugesetzt werden die bekannten Entformungsmittel, Stabilisatoren, Fließhilfsmittel, Farbmittel, Weichmacher und/oder Farbpigmente.

Als Entformungsmittel können alle bekannten Produkte, wie Esterwachse (z.B. Montanwachs), Amidwachs wie Rhenax® und/oder Oligoethylene verwendet werden. Als Weichmacher kommen z.B. aliphatische oligomere Polyester in Frage (siehe EP-A 29 931 und DE-A 27 06 128).

Die Verarbeitungshilfsmittel werden bevorzugt in Mengen von 0,3 bis 5 Gew.-Teilen, besonders bevorzugt 0,4 bis 2 Gew.-Teilen, den Polyethylenterephthalatformmassen zugesetzt.

Die Herstellung der Mischungen aus thermoplastischem Polyethylenterephthalat, Kristallisationshilfsmittel, Polyalkylphosphonat, gegebenenfalls Verarbeitungshilfsmitteln und Verstärkungsmitteln kann in den üblichen Mischaggregaten, wie Walzen, Knetern, Ein- und Mehrwellenextrudern, erfolgen. Die Verarbeitungshilfsmittel können als Konzentrate in thermoplastischem Polyester in Granulatform oder als Pulvermischung bei der Compoundierung der Komponenten zudosiert werden. Die Temperatur bei der Herstellung der Mischungen beträgt im allgemeinen mindestens 20°C und sollte höchstens 70°C oberhalb des Schmelzpunktes des Polyesters liegen.

Das Herstellungsverfahren kann sowohl diskontinuierlich als auch kontinuierlich unter Bedingungen durchgeführt werden, bei denen eine Oxidation weitgehend ausgeschlossen ist, d.h. unter Schutzgasatmosphäre. Als Schutzgas eignet sich z.B. Stickstoff, Kohlendioxid und/oder Argon.

Die Polymermischungen können gegebenenfalls einer thermischen Nachbehandlung in der festen Phase bei Temperaturen von 100 bis 220, bevorzugt 180 bis 210°C, unterzogen werden.

Die thermoplastische Verarbeitung der erfindungsgemäßen Formmassen zu Formkörpern kann bei Massetemperaturen bis 40°C oberhalb des Polyesterschmelzpunktes (250 bis 290°C) und bei Schmelzestandzeiten bis 9 Minuten (1 bis 9 Minuten) erfolgen. Bevorzugt werden Verarbeitungsbedingungen gewählt, bei denen die Massetemperaturen nicht höher als 270°C und die Schmelzestandzeiten nicht höher als 9 Minuten sind. Bei den besonders bevorzugten Verarbeitungsbedingungen liegen die Massetemperaturen nicht höher als 260°C und die Schmelzestandzeiten nicht höher als 6 Minuten.

Die erfindungsgemäßen Polyethylenterephthalatformmassen können eingesetzt werden bei der Herstellung von Formkörpern, Fasern oder Filmen.

Die erfindungsgemäßen Polyethylenterephthalatformmassen besitzen folgende Vorteile gegenüber den aus dem Stand der Technik bekannten flammgeschützten, verstärkten Polyethylenterephthalatformmassen: Sie besitzen bei einem hohen Grad der Flammwidrigkeit eine erhöhte Kristallisationsgeschwindigkeit gegenüber den bisher mit Polyphosphonaten flammgeschützten Formmassen und die Gefahr der Abspaltung toxischer Gase (Dioxine) gegenüber mit Sb/Br-Verbindungen flammgeschützten Formmassen ist geringer.

Neben den genannten Vorteilen der erfindungsgemäßen Polyethylenterephthalatformmassen ist besonders überraschend, daß durch die Kombination von ultrafeinem Bariumsulfat und fluorierten Polyolefinen sich die Kristallisationsneigung der Polyethylenterephthalat/Polyalkylphosphonatmischungen deutlich verbesserte, d.h. daß bei den Formmassen eine beschleunigte Kristallisation zu beobachten war, obwohl eine solche Wirkung bei Verwendung von fluorierten Polyolefinen oder feinverteiltem Bariumsulfat allein nicht auftrat. Dies bedeutet, daß die Kombination von fluorierten Polyolefinen und ultrafeinem Bariumsulfat eine synergistische Wirkung hinsichtlich der Kristallisation auf die Polyethylenterephthalatformmassen entfaltete.

### Beispiele

### I. Eingesetzte Komponenten

1. Polyethylenterephthalat mit einer Intrinsic-Viskosität von 0,72 dl/g, gemessen in Phenol/o-Dichlorbenzol-Gemisch (Gew.-Verhältnis 1:1), 25°C, Ubbelohde Viskosimeter.
2. Dioxidiphenylpolymethanphosphonat, verzweigt mit 1,56 Mol-% Tris-1,3,5-[(4-hydroxy)-2-phenylen-2-propyliden]-benzol) 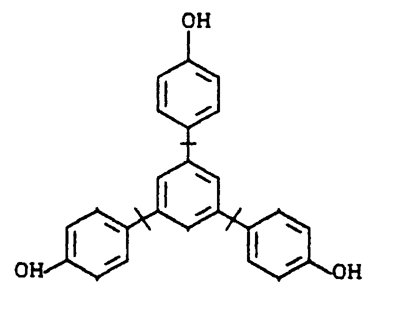
3. Feinstteiliges Bariumsulfat wie in DE-A 38 10 423 beschrieben (Korngröße: 0,07 bis 0,04 »m, Oberfläche (BET): 60 bis 30 m²/g).
4. PTFE der HOECHST AG (Hostaflon TF 2027).

### II. Herstellung des Polyphosphonats

### A. (POP)

25 Mol (4650 g) 4,4'-Dioxidiphenyl
25,1 Mol (6225 g) Methanphosphonsäurediphenylester
0,39 Mol (187,2 g) Komponente 1
2,15 mmol (0,25 g) Natriumphenolat
1 Mol (214 g) Diphenylcarbonat
Die Bestandteile weden unter Stickstoff bei 250°C intensiv in einem Autoklaven vermischt. Innerhalb von 3 Stunden wird unter einem von 250 auf 100 bar absinkendem Vakuum und bei einer von 250°C auf 265°C ansteigenden Temperatur Phenol über eine auf 100°C beheizte Kolonne abdestilliert. Anschließend wird die Umesterung 5 Stunden unter einem allmählich auf 0,3 mbar absinkenden Druck und einer auf 310°C ansteigenden Temperatur fortgesetzt, wobei die Viskosität der Schmelze ansteigt. Man belüftet mit Stickstoff, läßt das Polymer bei stillstehendem Rührer absitzen und erhält 5,3 kg Polyphosphonat durch Abspinnen unter Druck und Granulieren des Schmelzstranges. Das Polyphosphonat hat eine relative Viskosität von ηᵣₑₗ = 1,15 (gemessen in Methylenchlorid, 0,5 g/100 ml Lösung).

### III. Herstellung, Verarbeitung und Prüfung der Formmassen

Das Polyethylenterephthalat wird als Granulat eingesetzt; die Polyalkylphosphonate (POP) werden in Form von Pulver eingesetzt. Die eingesetzten Komponenten werden in einem Zweiwellenextruder geschmolzen, vermischt und zu Stängen extrudiert und granuliert. Die Herstellung der Formmassen kann beispielsweise mit einem Extruder, ZSK 32 der Firma Werner und Pfleiderer, bei Massetemperaturen von 270 bis 280°C und bei einer Schneckendrehzahl von 130 U/min sowie einem Durchsatz von 8 kg/h erfolgen.

Nach ausreichender Trocknung (z.B. 3 bis 4 Stunden bei 120°C) werden die Formmassen auf üblichen Spritzgußmaschinen bei Massetemperaturen von 250 bis 270°C, einer Formtemperatur von 80 bis 100°C und einer Schmelzestandzeit von nicht länger als 9 Minuten zu Formkörpern bzw. Normprüfstäben verspritzt.

Die Prüfung der Brandwidrigkeit erfolgt nach den Richtlinien der Underwriter Laboratories (UL-94-Test). Die Ergebnisse sind in den nachfolgenden Tabellen zusammengefaßt. Die Mengen der eingesetzten Komponenten sind in Gewichtsteilen angegeben.

Die Überprüfung der Wärmeformbeständigkeit erfolgt durch Messung des Vicat B nach ISO 306/DIN 53 460, den man auch in grober Näherung als Maß für die Kristallinität heranziehen kann.

Die Tabelle zeigt ein erfindungsgemäßes Beispiel (4) im Vergleich zum Stand der Technik (Beispiele 1 bis 3).

**Tabelle**

| Beispiel | 1 (Vergleich) | 2 (Vergleich) | 3 (Vergleich) | 4 |
|---|---|---|---|---|
| PET (%) | 57,5 | 54,5 | 57 | 54 |
| POP (%) | 12,5 | 12,5 | 12,5 | 12,5 |
| Glasfaser (%) | 30 | 30 | 30 | 30 |
| BaSO₄ (%) | - | 3,0 | - | 3,0 |
| PTFE (%) | - | - | 0,5 | 0,5 |
| UL-94 2d/7d | VO/VO | VO/VO | VO/VO | VO/VO |
| Vicat B (°C) | 94 | 94 | 98 | 212 |

Aus der Tabelle geht hervor, daß nur durch die Kombination der beiden an sich unwirksamen, d.h. nicht nuklierenden Substanzen, eine drastische Verbesserung des Vicat B-Wertes unter Erhalt der guten Brandeigenschaften erzielt werden kann.

## Patentansprüche

1. Flammgeschützte, gut kristallisierende Polyethylenterephthalatformmassen aus
A) 45 bis 80 Gew.-Teilen Polyethylenterephthalat mit einer Intrinsic-Viskosität von >0,30 dl/g, gemessen in Phenol/o-Dichlorbenzol (1:1, 25°C, 0,5 g/100 ml),
B) 1 bis 25 Gew.-Teilen Polyalkylphosphonaten der Formel 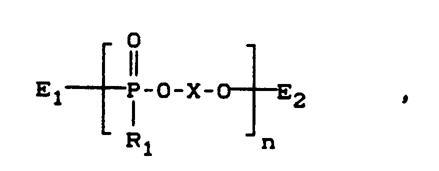 worin
R₁ für C₁- bis C₆-Alkyl steht,
X für die Formel 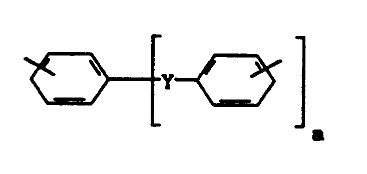 steht,
in der
Y eine Einfachbindung ist oder C₁- bis C₃-Alkylen, C₅- bis C₁₂-Cycloalkylen oder O, S, CO, SO₂ bedeutet und
a für 0 oder 1 steht, oder
X Naphthylen bedeutet,
E₁ für O-R₂, OH, O-X-OH steht, wobei R₂ für C₆-bis C₁₀-Aryl steht und X die obengenannte Bedeutung besitzt,
E₂ H, 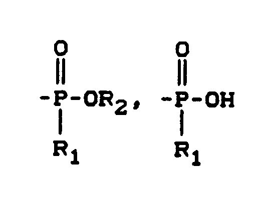 bedeutet, wobei
R₁ und R₂ die obengenannte Bedeutung haben und
n für ganze Zahlen von 2 bis 100 steht,
C) 0,01 bis 10 Gew.-Teilen Bariumsulfat mit einer Primärkorngröße von <0,1 »m,
D) 0,01 bis 5 Gew.-Teilen fluorierten Polyolefinen,
E) gegebenenfalls 0,1 bis 40 Gew.-Teilen anorganischen Verstärkungsmitteln und
F) gegebenenfalls 0,1 bis 10 Gew.-Teilen Verarbeitungshilfsmitteln.

2. Formmassen nach Anspruch 1, dadurch gekennzeichnet, daß sie als Polyalkylphosphonat Bisphenol-F-polymethanphosphonat, Bisphenol-A-polymethanphosphonat, Dioxidiphenylpolymethanphosphonat, Dioxidiphenylsulfonpolymethanphosphonat, Catecholpolymethanphosphonat, Resorcinpolymethanphosphonat und/oder Hydrochinonpolymethanphosphonat enthalten.

3. Formmassen nach Ansprüchen 1 und 2, dadurch gekennzeichnet, daß sie als fluorierte Polyolefine Polytetrafluorethylen (PTFE) enthalten.

4. Formmassen nach Ansprüchen 1 bis 3, dadurch gekennzeichnet, daß sie als anorganische Verstärkungsmittel Glasfasern, Glaskugeln und/oder mineralische Füllstoffe enthalten.

5. Formmassen nach Ansprüchen 1 bis 3, dadurch gekennzeichnet, daß sie als anorganische Verstärkungsmittel Glasfasern enthalten.

6. Formmassen nach Ansprüchen 1 bis 4, dadurch gekennzeichnet, daß sie als Verarbeitungshilfsmittel Entformungsmittel, Stabilisatoren, Fließhilfsmittel, Farbmittel, Farbpigmente und/oder Weichmacher enthalten.

7. Verwendung der Polyethylenterephthalatformmassen nach Anspruch 1 zur Herstellung von Formkörpern, Fasern oder Filmen.

## Claims

1. Flameproofed, readily crystallizing polyethylene terephthalate moulding compounds of
A) 45 to 80 parts by weight of polyethylene terephthalate having an intrinsic viscosity of >0.30 dl/g,
B) 1 to 25, parts by weight of polyalkyl phosphonates corresponding to the following formula 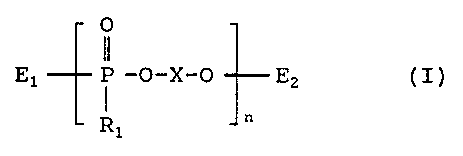 in which
R₁ represents C₁₋₆ alkyl,
X stands for the formula 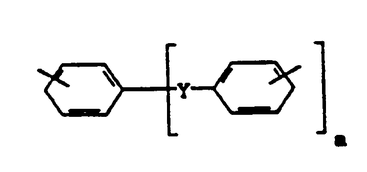 in which
Y is a single bond or represents C₁₋₃ alkylene, C₅₋₁₂ cycloalkylene or O, S, CO, SO₂ and
a = 0 or 1, or
X represents naphthylene,
E₁ represents O-R₂, OH, O-X-OH, where R₂ represents C₆₋₁₀ aryl and X is as defined above,
E₂ represents H, 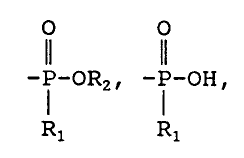 where R₁ and R₂ are as defined above,
and
n represents integers of 2 to 100,
C) 0.01 to 10 parts by weight of barium sulfate with a primary particle size of <0.1 »m,
D) 0.01 to 5 parts by weight of fluorinated polyolefins,
E) optionally 0.1 to 40 parts by weight of inorganic reinforcing agents and
F) optionally 0.1 to 10 parts by weight of processing aids.

2. Moulding compounds as claimed in claim, characterized in that they contain bisphenol F polymethane phosphonate, bisphenol A polymethane phosphonate, dihydroxydiphenyl polymethane phosphonate, dihydroxydiphenyl sulfone polymethane phosphonate, catechol polymethane phosphonate, resorcinol polymethane phosphonate and/or hydroquinone polymethane phosphonate as the polyalkyl phosphonate.

3. Moulding compounds as claimed in claims 1 and 2, characterized in that they contain polytetrafluoroethylene (PTFE) as the fluorinated polyolefin.

4. Moulding compounds as claimed in claims 1 to 3, characterized in that they contain glass fibres, glass beads and/or mineral fillers as inorganic reinforcing materials.

5. Moulding compounds as claimed in claims 1 to 3, characterized in that they contain glass fibres as inorganic reinforcing material.

6. Moulding compounds as claimed in claims 1 to 4, characterized in that they contain mould release agents, stabilizers, flow aids, colouring agents, coloured pigments and/or plasticizers as processing aids.

7. The use of the polyethylene terephthalate moulding compounds as claimed in claim 1 for the production of mouldings, fibres or films.

## Revendications

1. Compositions à mouler ignifuges à base de polytéréphtalate d'éthylène, ayant une bonne cristallinité, constituées
A) de 45 à 80 parties en poids de polytéréphtalate d'éthylène ayant une viscosité intrinsèque supérieure à 0,30 dl/g, mesurée dans un mélange phénol/o-dichlorobenzène (1:1, 25°C, 0,5 g/100 ml),
B) de 1 à 25 parties en poids de polyalkylphosphonates de formule 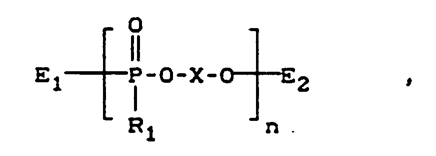 dans laquelle
R¹ est un groupe alkyle en C₁ à C₆,
X répond à la formule 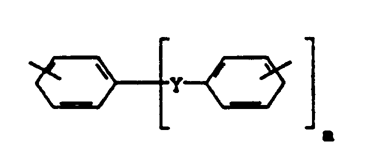 dans laquelle
Y est une liaison simple ou un groupe alkylène en C₁ à C₃, cycloalkylène en C₅ à C₁₂ ou représente O, S, CO, SO₂ et
a a la valeur 0 ou 1, ou bien
X est un groupe naphtylène,
E₁ est un groupe O-R₂, OH, O-X-OH, dans lequel R₂ est un radical aryle en C₆ à C₁₀ et X a la définition indiquée ci-dessus,
E₂ représente H, 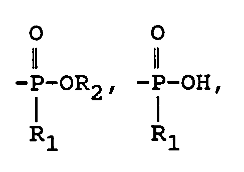 où
R₁ et R₂ ont la définition indiquée ci-dessus et
n représente des nombres entiers de 2 à 100,
C) de 0,01 à 10 parties en poids de sulfate de baryum ayant un diamètre de grain primaire inférieur à 0,1 »m
D) de 0,01 à 5 parties en poids de polyoléfines fluorées
E) le cas échéant, de 0,1 à 40 parties en poids d'agents inorganiques de renforcement et
F) le cas échéant de 0,1 à 10 parties en poids de substances auxiliaires de mise en oeuvre.

2. Compositions à mouler suivant la revendication 1, caractérisées en ce qu'elles contiennent comme polyalkylphosphonate du polyméthanephosphonate de bisphénol-F, du polyméthanephosphonate de bisphénol-A, du polyméthanephosphonate de dioxydiphényle, du polyméthanephosphonate de dioxydiphénylsulfone, du polyméthanephosphonate de catéchol, du polyméthanephosphonate de résorcinol et/ou du polyméthanephosphonate d'hydroquinone.

3. Compositions à mouler suivant les revendications 1 et 2, caractérisées en ce qu'elles contiennent comme polyoléfines fluorées un polytétrafluoréthylène (PTFE).

4. Compositions à mouler suivant les revendications 1 à 3, caractérisées en ce qu'elles contiennent comme agents inorganiques de renforcement des fibres de verre, des sphères de verre et/ou des charges minérales.

5. Compositions à mouler suivant les revendications 1 à 3, caractérisées en ce qu'elles contiennent des fibres de verre comme agents inorganiques de renforcement.

6. Compositions à mouler suivant les revendications 1 à 4, caractérisées en ce qu'elles contiennent comme substances auxiliaires de mise en oeuvre, des agents de démoulage, des agents stabilisants, des substances auxiliaires d'écoulement, des matières colorantes, des pigments de couleur et/ou des plastifiants.

7. Utilisation des compositions à mouler à base de polytéréphtalate d'éthylène suivant la revendication 1 pour la production de corps façonnés, de fibres ou de films.
